Europäisches Patentamt

European Patent Office

Office européen des brevets

(11) Veröffentlichungsnummer: **0 421 014 A1**

# (12) EUROPÄISCHE PATENTANMELDUNG

(21) Anmeldenummer: 89118577.9

(22) Anmeldetag: 06.10.89

(51) Int. Cl.5: **H02B 1/30**

(43) Veröffentlichungstag der Anmeldung:
**10.04.91 Patentblatt 91/15**

(84) Benannte Vertragsstaaten:
**AT BE CH DE ES FR GB GR IT LI LU NL SE**

(71) Anmelder: **Rittal-Werk Rudolf Loh GmbH & Co. KG**
**Auf dem Stützelberg**
**W-6348 Herborn(DE)**

(72) Erfinder: **Zachrai, Jürgen**
**Am Hungersberg 2**
**W-6340 Dillenburg 8(DE)**
Erfinder: **Bovermann, Claus-Dieter**
**Am Oberg 7**
**W-3565 Breidenbach-Niederdieten(DE)**

(74) Vertreter: **Vogel, Georg**
**Pat.-Ing. Georg Vogel**
**Hermann-Essig-Strasse 35**
**W-7141 Schwieberdingen(DE)**

(54) **Schaltschrank mit einem mittels einer Flanschplatte verschliessbaren Durchbruch in einer Wand des Schrankkorpus.**

(57) Die Erfindung betrifft einen Schaltschrank mit einem an der Vorderseite offenen Schrankkorpus, der in mindestens einer Wand einen Durchbruch aufweist, welcher mittels einer Flanschplatte verschließbar ist. Ein leichtes und schnelles Anbringen und Lösen der Flanschplatte ohne Werkzeug wird dadurch erreicht, daß der Durchbruch im Bereich von zwei einander gegenüberliegenden Seiten senkrecht zum Durchbruch stehende, in den Schrankinnenraum gerichtete Raststege aufweist, daß die Flanschplatte an den zugekehrten Randbereichen mit einem Schlitz versehene Lagerhülsen trägt, in die begrenzt schwenkbare Rastfedern einführbar sind, und daß die Rastfedern mit einem Rastschenkel hinter die Raststege einrastbar und diese Rastverbindungen wieder lösbar sind.

EP 0 421 014 A1

# SCHALTSCHRANK MIT EINEM MITTELS EINER FLANSCHPLATTE VERSCHLIESSBAREN DURCHBRUCH IN EINER WAND DES SCHRANKKORPUS

Die Erfindung betrifft einen Schaltschrank mit einem an der Vorderseite offenen Schrankkorpus, der in mindestens einer Wand einen Durchbruch aufweist, welcher mittels einer Flanschplatte verschließbar ist.

Bei den bekannten Schaltschränken wird die Flanschplatte mittels Schraubverbindungen mit dem Schrankkorpus verbunden. Die Schraubverbindungen lassen kein einfaches und schnelles Lösen oder Anbringen der Flanschplatte zu. Dies ist insbesondere dann nachteilig, wenn die Flanschplatte häufig gelöst und wieder angebracht werden muß, da zudem stets ein Werkzeug erforderlich ist.

Es ist Aufgabe der Erfindung, einen Schaltschrank der eingangs erwähnten Art zu schaffen, bei dem die Flanschplatte ohne Werkzeuge leicht und schnell am Schaltschrank angebracht und ebenso leicht und schnell wieder vom Schaltschrank gelöst werden kann.

Diese Aufgabe wird nach der Erfindung einmal dadurch gelöst, daß der Durchbruch im Bereich von zwei einander gegenüberliegenden Seiten senkrecht zum Durchbruch stehende, in den Schrankinnenraum gerichtete Raststege aufweist, daß die Flanschplatte an den zugekehrten Randbereichen mit einem Schlitz versehene Lagerhülsen trägt, in die begrenzt schwenkbare Rastfedern einführbar sind, und daß die Rastfedern mit einem Rastschenkel hinter die Raststege einrastbar und diese Rastverbindungen wieder lösbar sind.

Die Flanschplatte braucht nur an den Durchbruch angesetzt zu werden, wobei die Rastfedern durch den Durchbruch geführt und mit den am Schrankkorpus angebrachten Raststegen verrastet werden. Die Rastfedern sind dabei durch die offene oder geöffnete Vorderseite des Schrankkorpus zugänglich und können durch einfaches Verschwenken in den Lagerhülsen in die Raststege eingerastet werden. Auf demselben Wege können die Rastverbindungen auch wieder gelöst und die Flanschplatte vom Schrankkorpus entfernt werden.

Die Aufgabe kann nach einer gleichwertigen Ausgestaltung auch dadurch gelöst werden, daß der Durchbruch im Bereich einer Seite und die zugekehrte Seite der Flanschplatte mit aufeinander abgestimmten Steckaufnahmen und Steckstegen versehen sind, daß der Durchbruch an der gegenüberliegenden Seite einen senkrecht zum Durchbruch stehenden, in den Schrankinnenraum gerichteten Raststeg aufweist, daß die Flanschplatte an dem zugekehrten Randbereich mit einem Schlitz versehene Lagerhülsen trägt, in die begrenzt schwenkbare Rastfedern einführbar sind, und daß die Rastfedern mit einem Rastschenkel hinter die Raststege einrastbar und diese Rastverbindungen wieder lösbar sind.

Entlang einer Seite der Flanschplatte wird eine Verbindung durch Stecken erhalten, während die Rastverbindungen nur an der gegenüberliegenden Seite vorgesehen sind. Dadurch wird der Aufwand an Rastfedern und Lagerhülsen reduziert.

Nach einer bevorzugten Ausgestaltung ist vorgesehen, daß die Raststege, die Steckaufnahmen bzw. Steckstege über die gesamte Seite reichen und am Schrankkorpus bzw. der Flanschplatte abgekantet sind.

Die Raststege können nach einer Ausgestaltung auch Teil von Winkeln sein, die im Bereich des Durchbruches an dem Schrankkorpus angebracht sind und zwar in der Verteilung der Lagerhülsen an der Flanschplatte.

Die Schwenklagerung der Rastfedern ist dadurch erreicht, daß die Rastfedern in eine Lageröse auslaufen, deren Außendurchmesser an den Innendurchmesser der Lagerhülsen abgestimmt ist. Die Lagerhülsen snd dabei mit ihren Achsen parallel zu den zugekehrten Randbereichen der Flanschplatte ausgerichtet und auf der dem Schrankkorpus zugekehrten Innenseite der Flanschplatte angebracht.

Um einen begrenzten Schwenkbereich der Rastfeder in der Lagerhülse zu bekommen, ist nach einer Ausgestaltung einfach vorgesehen, daß die Schlitze eine Breite aufweisen, die größer ist als die Dicke der Rastfeder und in den Bereichen der Lagerhülsen eingebracht sind, die den größten Abstand zur Flanschplatte aufweisen.

Die Rastfeder ist Z-förmig ausgebildet und der Rastschenkel, der hinter den Raststeg einrastet, ist aus der Rastfeder ausgestanzt und ausgebogen. Die Handhabung der Rastfeder wird dadurch erleichtert, daß das freie Ende der Rastfeder als Handhabe ausgebildet ist.

Die offene Vorderseite des Schrankkorpus kann mittels mindestens einer am Schrankkorpus angelenkten Schranktür verschlossen werden.

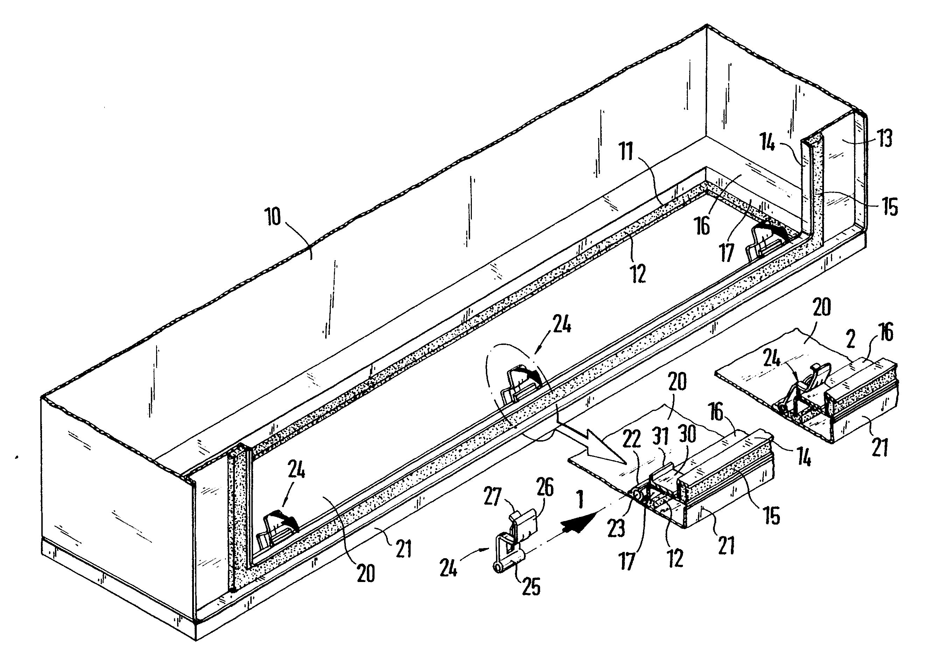

Die Erfindung wird anhand eines in der Zeichnung dargestellten Ausführungsbeispiels näher erläutert.

Der Schrankkorpus 10 ist nur mit dem unteren Teil gezeigt. Die Vorderseite ist offen, wobei der Teil 13 der Vorderwand in den umlaufenden Abschlußsteg 14 übergeht. An den Abschlußsteg 14 schließt sich auf der Außenseite des Teils 13 das Dichtungselement 15 an. Die offene Vorderseite kann dann z.B. mit einer Schranktür oder einer Abschlußwand dicht abgeschlossen werden.

Die Bodenwand des Schrankkorpus 10 weist den Durchbruch 11 auf, der von der Abkantung 17 begrenzt ist, die am Rastbodenteil 16 abgebogen ist. Das Dichtungselement 12 dichtet zwischen der Flanschplatte 20 und dem Durchbruch 11 des Schrankkorpus 10 ab, wie der vor dem Schrankkorpus 10 dargestellte Ausschnitt zeigt. Die Flanschplatte 20 ist an den Randbereichen abgekantet, wie der Rand 21 erkennen läßt. Auf der Innenseite der Flanschplatte 20 sind Lagerhülsen 22 angebracht, die parallel zu den Randbereichen ausgerichtet und in den Bereichen, die am weitesten von der Flanschplatte 20 entfernt sind, mit Schlitzen 23 versehen sind. Bei dem Ausführungsbeispiel sind im vorderen Randbereich des Durchbruches 11 und der Flanschplatte 20 drei Rastfedern 24 vorgesehen, um die Flanschplatte 20 mittels Rastverbindungen schnell und leicht an dem Schrankkorpus 10 anzubringen und wiederum dem Schrankkorpus 10 lösen zu können. Die Flanschplatte 20 trägt drei Lagerhülsen 22, die parallel zum Randbereich der Flanschplatte 20 und zur zugekehrten Seite des Durchbruches 11 verlaufen und mit jeweils einem Schlitz 23 versehen sind.

Auf dem Teil 16 der Bodenwand sind drei Winkel 30 befestigt, die auf die Verteilung der Lagerhülsen 22 auf der Flanschplatte 20 abgestimmt sind und mit dem Raststeg 31 abstehen. Die Raststege 31 sind senkrecht zur Flanschplatte 20 und zum Durchbruch 11 ausgerichtet und stehen zur Schrankinnenseite am Teil 16 der Bodenwand ab.

In die Lagerhülsen 22 sind die Rastfedern 24 einführbar, die in die Lageröse 25 auslaufen. Die Lageröse 25 hat einen Außendurchmesser, der dem Innendurchmesser der Lagerhülsen 22 entspricht. Der Schlitz 23 der Lagerhülsen 22 hat eine Breite, die größer ist als die Dicke der Z-förmig gebogenen Rastfeder 24. Auf diese Weise kann die in die Lagerhülse 22 eingeführte Rastfeder 24 begrenzt verschwenkt werden. In der Rastfeder 24 ist der Rastschenkel 27 ausgestanzt und ausgebogen, der hinter den Raststeg 31 einrastet, wenn die Rastfeder 24 in Richtung zum Raststeg 31 verschwenkt wird, wie der zweite Ausschnitt vor dem Schrankkorpus 10 erkennen läßt. Damit ist die Flanschplatte 20 am Schrankkorpus 10 festlegbar, ohne dazu Werkzeuge verwenden zu müssen.

Es bleibt noch zu erwähnen, daß die Flanschplatte 20 auch im Bereich des hinteren Randbereiches mit Lagerhülsen 22 für Rastfedern 24 versehen sein kann. Die Rastfedern 24 werden mit der Flanschplatte 20 durch den Durchbruch 11 eingeführt und dann durch die offene Vorderseite zugänglich in die Raststellungen gebracht. Der Schrankkorpus 10 trägt dann auch im Bereich der hinteren Seite des Durchbruches 11 entsprechend verteilte Raststege 31. Es kann auch jeweils ein durchgehender, abgekanteter Raststeg an den beiden, einander gegenüberliegenden Seiten des Durchbruches 11 vorgesehen sein. Die Anzahl der Lagerhülsen 22 und Rastfedern 24 beträgt pro Seite mindestens zwei und richtet sich auch nach der Größe der Flanschplatte 20.

Im Bereich der hinteren Seite kann die Seite des Durchbruches 11 auch als U-förmige Steckaufnahme ausgebildet sein, die am Schrankkorpus 10 abgekantet oder als zusätzlicher Profilabschnitt angebracht sein kann. Der zugekehrte hintere Randbereich der Flanschplatte 20 bildet dann einen Stecksteg, der einfach in die Steckaufnahme eingesteckt wird. Es können ähnlich der Winkel 30 auch nur einzelne Steckaufnahmeteile am Schrankkorpus 10 angebracht sein, die den Stecksteg der Flanschplatte 20 aufnehmen. Ist die Steckverbindung hergestellt, wird die Flanschplatte 20 im Bereich der vorderen Seite mittels der Rastfedern 24 am Schrankkorpus 10 verrastet. Die Rastverbindungen lassen sich durch Verschwenken der Rastfedern 24 wieder leicht lösen.

## Ansprüche

1. Schaltschrank mit einem an der Vorderseite offenen Schrankkorpus, der in mindestens einer Wand einen Durchbruch aufweist, welcher mittels einer Flanschplatte verschließbar ist,
dadurch gekennzeichnet,
daß der Durchbruch (11) im Bereich von zwei einander gegenüberliegenden Seiten senkrecht zum Durchbruch (11) stehende, in den Schrankinnenraum gerichtete Raststege (31) aufweist,
daß die Flanschplatte (20) an den zugekehrten Randbereichen mit einem Schlitz (23) versehene Lagerhülsen (22) trägt, in die begrenzt schwenkbare Rastfedern (24) einführbar sind, und
daß die Rastfedern (24) mit einem Rastschenkel (27) hinter die Raststege (31) einrastbar und diese Rastverbindungen wieder lösbar sind.

2. Schaltschrank mit einem an der Vorderseite offenen Schrankkorpus, der in mindestens einer Wand einen Durchbruch aufweist, welcher mittels einer Flanschplatte verschließbar ist, dadurch gekennzeichnet,
daß der Durchbruch (11) im Bereich einer Seite und die zugekehrte Seite der Flanschplatte (20) mit aufeinander abgestimmten Steckaufnahmen und Stegstegen versehen sind, daß der Durchbruch (11) an der gegenüberliegenden Seite einen senkrecht zum Durchbruch (11) stehenden, in den Schrankinnenraum gerichteten Raststeg (31) aufweist, daß die Flanschplatte (20) an dem zugekehrten Randbereich mit einem Schlitz (23) versehene Lagerhülsen (22) trägt, in die begrenzt schwenkbare Rastfedern (24) einführbar sind, und
daß die Rastfedern (24) mit einem Rastschenkel (27) hinter die Raststege (31) einrastbar und diese Rastverbindungen wieder lösbar sind.

3. Schaltschrank nach Anspruch 1 oder 2,
dadurch gekennzeichnet,
daß die Raststege (31), die Steckaufnahmen bzw. Stegstege über die gesamte Seite reichen und am Schrankkorpus (10) bzw. der Flanschplatte (11) abgekantet sind.

4. Schaltschrank nach Anspruch 1 oder 2,
dadurch gekennzeichnet,
daß die Raststege (31) Teil von Winkeln (30) sind, die im Bereich des Durchbruches (11) an dem Schrankkorpus (10) in der Verteilung der Lagerhülsen (22) für die Rastfedern (24) angebracht sind.

5. Schaltschrank nach einem der Ansprüche 1 bis 4,
dadurch gekennzeichnet,
daß die Lagerhülsen (22) mit ihren Achsen parallel zu den zugekehrten Randbereichen der Flanschplatte (11) ausgerichtet sind und
daß die Lagerhülsen (22) auf der dem Schrankkorpus (10) zugekehrten Innenseite der Flanschplatte (11) angebracht sind.

6. Schaltschrank nach einem der Ansprüche 1 bis 5,
dadurch gekennzeichnet,
daß die Schlitze (23) eine Breite aufweisen, die größer ist als die Dicke der Rastfeder (24) und in den Bereichen der Lagerhülsen (22) eingebracht sind, die den größten Abstand zur Flanschplatte (11) aufweisen.

7. Schaltschrank nach einem der Ansprüche 1 bis 6,
dadurch gekennzeichnet,
daß die Rastfedern (24) in eine Lageröse (25) auslaufen, deren Außendurchmesser an den Innendurchmesser der Lagerhülsen (22) abgestimmt ist.

8. Schaltschrank nach einem der Ansprüche 1 bis 7,
dadurch gekennzeichnet,
daß die Rastfeder (24) Z-förmig ausgebildet ist und daß der Rastschenkel (27) aus der Rastfeder (24) ausgestanzt und ausgebogen ist.

9. Schaltschrank nach einem der Ansprüche 1 bis 8,
dadurch gekennzeichnet,
daß das freie Ende der Rastfeder (24) als Handhabe (26) ausgebildet ist.

10. Schaltschrak nach einem der Ansprüche 1 bis 9,
dadurch gekennzeichnet,
daß die offene Seite des Schrankkorpus (10) mittels einer am Schrankkorpus (10) angelenkten Schranktür verschließbar ist.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | US-A-3056639 (B.CAMINKER ET AL) <br> * Spalte 5, Zeile 47 - Spalte 6, Zeile 40; Figur 2 * <br> --- | 1, 2 | H02B1/30 |
| A | DE-B-2801252 (ELEKTROINNNUNG MÜNCHEN) <br> * Spalte 7, Zeile 48 - Spalte 8, Zeile 27; Figur 1 * <br> --- | 1, 2 | |
| A | GB-A-802586 (F.T.PRODUCTS LTD) <br> * Seite 1, Zeile 34 - Seite 2, Zeile 8; Figuren 1-4 * <br> --- | 1, 2 | |
| A | US-A-4717102 (D.PFLIEGER) <br> * Spalte 2, Zeile 48 - Spalte 4, Zeile 6; Figuren 1-4 * <br> ----- | 1, 2 | |

| RECHERCHIERTE SACHGEBIETE (Int. Cl.5 ) |
|---|
| H02B <br> H05K <br> F16B |

Der vorliegende Recherchenbericht wurde für alle Patentansprüche erstellt

| Recherchenort | Abschlußdatum der Recherche | Prüfer |
|---|---|---|
| DEN HAAG | 22 MAI 1990 | WOODALL C.G. |

EPO FORM 1503 03.82 (P0403)